# EUROPEAN PATENT APPLICATION

(11) **EP 4 679 261 A1**
(43) Date of publication of application: **14.01.2026**
(21) Application number: 24306166.0
(22) Date of filing: 11.07.2024
(51) Int. Cl.: G06F 8/72, G06F 8/51, G06F 8/41

(54) **A CONCURRENT PROGRAMMING COMPILING METHOD, ASSOCIATED DEVICE AND COMPUTER PROGRAM**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: FAISSOLE, Florian, 35708 RENNES CÉDEX 7 (FR); COUSINEAU, Denis, 35708 RENNES CÉDEX 7 (FR)
(74) Representative: Plasseraud IP

(57) **Abstract**

The disclosure relates to a method for generating an output source code (POSC) that can be executed in parallel over a processor with at least two cores. This method is implemented by an electronic device with a processor and memory, and involves the following steps:
- Obtaining a syntax tree data structure (STDS) of an input source code (ISC) written in a non-concurrent programming language, with precompiling directives (PCD), into the memory of the electronic device.
- Identifying at least one shared variable within the input source code (ISC) using the syntax tree data structure (STDS).
- Determining the location of the at least one mutex (MTX) in the syntax tree data structure (STDS) for the output source code (POSC) as a function of the precompiling directives (PCD) of the input source code.
- Determining task ordering in the syntax tree data structure (STDS) for the output source code (POSC), as a function of the precompiling directives (PCD) of the input source code.
- Generating the output source code (POSC) from the syntax tree data structure (STDS).

## Description

### TECHNICAL FIELD

The disclosure relates to concurrent programming, The disclosure more specifically relates to transformation of non-concurrent programming computer programs into concurrent programming computer programs for execution on multicore executing platforms. The disclosure more specifically exposes a method of efficiently performing such transformation so as to benefits from executing power of multicore executing platforms.

### BACKGROUND ART

The demand for enhanced processing power in computer software is escalating, particularly for tasks like image processing and distributed control. However, the speed of processors is constrained, and significant advancements in processing power are unlikely soon. A potential remedy is the simultaneous use of multiple processors for a single program's execution, a method known as "multicore" or concurrent programming. This is the case in the automotive industry, for example. For many years, vehicles were fitted with ECUs, some of which had specific functions. They communicated with each other or with a central ECU via a data transport protocol, operating over a wired link (CAN bus). As each computer could perform its own calculations with its own resources (memory in particular), access to competing data was simplified, with each computer working on its own data at a given moment. However, this situation is changing with the use of multi-core processors, including in vehicles, which are expected to perform, in parallel, tasks that were previously carried out by different computers. It is therefore necessary to "refactor" the source codes of these different software programs so that they function in an equivalent way, while guaranteeing the absence of data competition and interlocking of the different functions.

Nevertheless, the creation, from an input source code, of such concurrent program is susceptible to errors.

This refactoring can be done by hand. However, when tens of thousands of lines of code are involved, such work is tedious and often leads to errors or misinterpretation on the part of the programmers. Test phases for manually updated code are time-consuming, costly and don't always identify the errors introduced. That's why we've been exploring automatic methods for securing refactoring work.

Various types of issues can arise, such as deadlocks, data races, ordering violation, and atomicity violations. Identifying these errors is challenging due to their association with intricate timing conditions between the concurrent components, which are executed simultaneously on different processors (core) and are almost impossible to replicate for standard testing. Furthermore, concurrency in programs leads to an exponential surge in potential program states due to the numerous possibilities of concurrent components' simultaneous execution, further complicating testing.

Most existing concurrent programming transforming methods focus on a specific type of bug. For example, abstract interpretation techniques are used to identify shared variables to prevent data races, but the analysis is slow and not industrially efficient. Other tools are responsible for lock placement to ensure atomicity and prevent deadlocks, without considering the correctness of data protection.

Some correct-by-construction languages compile programs that are free of user-independent bugs like data races and deadlocks, but they can't prevent mis-requirements of atomicity or ordering constraints and are significantly different from traditional imperative languages, like C for example, and thus not widely usable. Dataflow languages offer additional capabilities but are even further from traditional imperative languages. Parallelizing compilers can generate a correct concurrent program from a sequential (non-concurrent) program by attempting to infer the code sections that could be parallelized. However, their applications are limited, and each parallelizing compiler is designed for specific applications and programs. In a broader context, these compilers produce programs that are not efficient, primarily because the programmer has no control over the parallelism. They are also limited to preventing data races and deadlocks and cannot manage functional specifications.

There is thus a need for providing a method that allows efficient transformation of sequential program written in standard language like C in concurrent programming program which is executable on multicore platforms.

### SUMMARY

The present disclosure aims at improving the situation. In particular, the present disclosure aims at overcoming at least some of the limitations of the prior art discussed above, notably by allowing the effective implementation, in autonomous modes of method for transforming nonparallel code in parallel executable code. Hence, according to a first aspect, the disclosure relates to a method for generating an output source code, the output source code being compilable for being executed in parallel over a processor which comprises at least two cores, the method being implemented by an electronic device comprising a processor and a memory, the method comprising the following ordered steps, executed by the electronic device:
- obtaining, into the memory of the electronic device, a syntax tree data structure of an input source code written in a non-concurrent programming language, the input source code further comprising predetermined precompiling directives,
- identifying, with the syntax tree data structure, at least one shared variable within the input source code, comprising: implementing, in the syntax tree data structure, at least one pointer analysis which delivers a pointer dependency point-to graph, the pointer dependency point-to graph linking the use of each pointed variable with each other and determining at least one mutex to be added to the output source code based on the pointer dependency point-to graph and based on the precompiling directives,
- determining location of the at least one mutex in the syntax tree data structure for the output source code as a function of the precompiling directives of the input source code,
- determining task ordering in the syntax tree data structure for the output source code, as a function of the precompiling directives of the input source code,
- generating the output source code from the syntax tree data structure.

In specific embodiments, the precompiling directives of the input source code belong to the group comprising:
- atomicity requirement directive,
- instructions ordering directive,
- task spawning directive,
- task synchronization directive.

In specific embodiments, obtaining into the memory of the electronic device, a syntax tree data structure of the input source code comprises, a pre-analyzing step comprising a parsing step in which the input source code is transformed into the form of the syntax tree data structure and stored within the memory of the electronic device.

In specific embodiments, the pre-analyzing step further comprises a checking step for determining that the input source code and the precompiling directives are exempt of incompatible statements.

Hence the proposed method allows avoiding the electronic device spending time to determine a parallelism structure for the input source code when this input source code has incompatibilities with the generating method.

In specific embodiments, obtaining into the memory of the electronic device, a syntax tree data structure of the input source code further comprises a pre-processing step in which the syntax tree data structure is updated by transforming parts of the input source code that comprises instructions ordering directives into corresponding parts comprising task spawning and task synchronization directives.

In specific embodiments, transforming parts of the input source code that comprises instructions ordering directives into corresponding parts comprising task spawning and task synchronization directives comprises splitting some functions, which comprises instruction ordering precompiling directives for accessing to some variables, in subfunctions and in which the electronic device replace the instruction ordering precompiling directives with task spawning and task synchronization precompiling directives in syntax tree data structure of the input source code.

Hence the proposed method allows simplifying the determination of the shared variable in case some ordering directive, within different functions or tasks, are present in the input source code.

In specific embodiments, identifying with the syntax tree data structure, at least one shared variables within the input source code comprises, for each statement of the input source code:
- a competitor determination sub-step in which the competitor of the statement are determined based on the order of execution of the competitor compared to the statement,
- a locally accessed data computation sub-step in which a set of variables directly accessed by the statement is determined,
- a sequential pointer analysis sub-step, in which a set of variables indirectly accessed by the statement is determined and stored in a first point-to graph data structure,
- an analysis of competitors sub-step, in which a set of variables directly accessed by the competitors of the statement is determined, and in which a set of variables indirectly accessed by the competitors of the statement is determined and stored in at least one second point-to graph data structure,
- a parallel pointer analysis sub-step, in which the first point-to graph data structure and the at least one second point-to graph data structure are merged in a unified point-to graph data structure,
- a shared variable identification sub-step, in which, with said unified point-to graph data structure and the set of variables directly accessed by the statement are used to identify the variables which are accessed at least twice, one of this access being done in write mode,
- a trans-competitors computation sub-step in which a set of variables indirectly accessed by the competitors of the competitors of the statement is determined and stored in at least one third point-to graph data structure and merged with the unified point-to graph data structure in a trans parallel point-to graph data structure,
- a required variable protection identification sub-step in which terminal nodes of the trans parallel point-to graph data structure are selected as variable to be protected.

In specific embodiments, the competitor determination sub-step comprises determining whether, within the syntax tree data structure, the current statement s is located after a task synchronization directive, and in the case the current statement s is located after a task synchronization directive, ignoring potential competitor statements located before the task synchronization directive.

In specific embodiments, the sequential pointer analysis sub-step comprises determining whether, within the syntax tree data structure, the current statement s is located into a code section that has been labelled by an atomicity directive, and in the case the current statement s is located into a code section that has been labelled by an atomicity directive, performing a path-sensitive pointer analysis for this code section.

In specific embodiments, the pointer analysis is a Steensgard's analysis.

According to a second aspect, the present disclosure relates to a computer program product comprising instructions which, when executed by at least one processor, configure said at least one processor to carry out a method according to any one of the embodiments of the present disclosure.

According to a third aspect, the present disclosure relates to a computer-readable storage medium comprising instructions which, when executed by at least one processor, configure said at least one processor to carry out a method according to any one of the embodiments of the present disclosure.

According to a fourth aspect, the present disclosure relates to an electronic device for generating an output source code, said electronic device comprising at least one processor and at least one memory, wherein the at least one processor is configured to carry out a method according to any one of the embodiments of the present disclosure.

### BRIEF DESCRIPTION OF DRAWINGS

More details are presented in the specification below, with reference to the appended drawings where:
- Figure 1 illustrates the main steps of the proposed method,
- Figures 2a to 2c illustrate the precompiling directives according to the disclosure,
- Figures 3a to 3f illustrate examples of preprocessing according to the disclosure,
- Figures 4 illustrates the identification of the shared variables, according to a realization,
- Figures 5a to 5h relates the creation of a point-to graph, illustrating dependencies among variables in illustrative examples,
- Figure 6 illustrates an algorithm for ordering mutexes placement according to the disclosure.

### DESCRIPTION OF EMBODIMENTS

### General disclosure

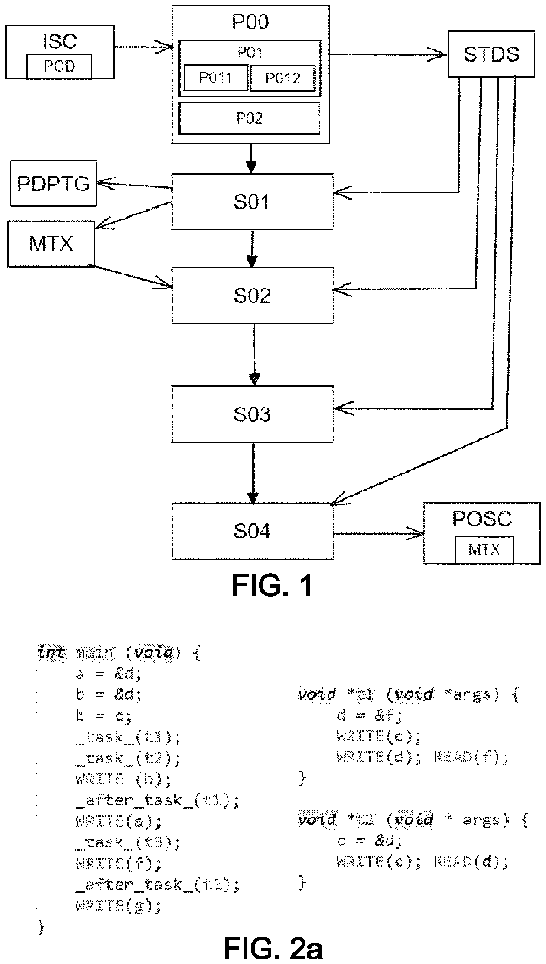

An object of the disclosure is to allow transformation of a "sequential" non concurrent input program in an efficient parallelized output program which is runnable (after compilation) on multicore platforms. This disclosure uses specific methods to eliminate concurrency errors in concurrent programs written in traditional programming languages, thereby bypassing the costly and challenging testing process. The proposed method uses a sequential, or non-concurrent, input program written in a traditional imperative language supplemented with annotations (precompiling directives) that pinpoint concurrent tasks, atomic sections within those tasks (i.e., parts of a task that should not be affected by other tasks' parallel executions), and orders constraints between tasks or instructions. For clarity purposes, a task is a function that can be parallelizable, according to the precompiling directives. As exposed in figure 1, the proposed method comprises six fully automated steps, among which three of them utilize specific methods to produce a concurrent program devoid of any concurrency errors.

The first main step S01 comprises identifying shared variables within the input program, the second step S02 comprises building a locking strategy to prevent incorrect program execution and deadlocks in accessing shared variables, and the third step S03 includes building an ordering strategy to prevent execution order violations and deadlocks in messaging between concurrent tasks. As it is detailed below, these steps rely on analyses that ensure exhaustiveness while also being efficient and scalable. As expected, the latter steps of the approach build upon the results of the earlier ones. However, the method of the disclosure is not a sequential application of these steps. Instead, it refines the analyses in the earlier steps by anticipating the effects of the later steps on the generated code, according to the annotated precompiling directives in the input program, to enhance the precision of the analysis without compromising performance, hence allowing the method to be industrially implemented. With respect to figure 1, the full steps of the proposed method according to the disclosure are illustrated.

The first step is obtaining P00 the input source code ISC written in a non-concurrent programming language, for example C, *the input source code being exempt of concurrent programming add-ons and* the input source code ISC being further annotated by precompiling directives PCD. The input source code ISC is a program written in a traditional imperative language with pointers, e.g., the C language, without any concurrency directives of the traditional language (no threads, no data protection against concurrent accesses, no synchronization directives). This program is made of tasks, i.e., particular (user defined) functions that contains sequential code, regular functions (that will not be used as tasks), an orchestrator (main function) that contains its own code and calls to regular functions and tasks. The tasks and the regular functions can themselves call regular functions. The program can be made of several files. As an example, the input source code ISC can be made of several files which were formerly grouped for being executed on several distinct single core computing platforms (one group of files per single core computing platform, the communication between the single core platform being made by message exchanges) and that now needs to be reunited for being executed on an efficient multicore platform.

The precompiling directives PCD of the input source code ISC are of several types. For sake of clarity, the types of these precompiling directives PCD are described in detail below. It can be noted that these directives instruct the way the input source code ISC is to be transformed into the output source code POSC. The directives are disseminated in the input source code ISC. They are of four types of directives: tasks spawning directives, tasks synchronization directives, atomicity requirements and fine-grained instructions ordering directives. A task spawning directive (e.g. *"_task_()")* instructs to create and spawn a thread. A task synchronization directive (e.g. *"_after_task()")* instructs to wait for the end of a task before beginning a new one. An atomicity requirement directive (e.g. *"_atomic_"*) instructs to protect the execution of a part of the code. A fine-grained instructions ordering directive (e.g. "_label_()" and "_after Q") pairly instructs synchronization at a statement level (the synchronization being done inside different tasks). Detailed examples of the directives are provided above. These precompiling directives PCD are for example manually inserted by a programmer in charge of transforming the input source code ISC into the output source code POSC. These precompiling directives PCD are for example automatically inserted by a high-level source code analyzer in charge of making the input source code ISC parallelizable. Whatever the situation, the way the directives are effectively annotated in the input source code ISC is out of the disclosure scope.

With this input source code ISC with precompiling directives PCD, a pre-analyzing step P01 is performed. This pre-analyzing step P01 comprises a parsing step P011 and a checking step P012. The parsing step P011 comprises building, into the memory of the computing device executing the disclosure method, an internal data structure for representing the input source code ISC augmented with its precompiling directives, e.g., a syntax tree data structure (STDS) for representing the program. The syntax tree data structure (STDS) for representing the program allows manipulating the input source code ISC augmented with its precompiling directives and to carry out the next steps. In consequence the syntax tree data structure (STDS) for representing the program is transformed by the next steps of the disclosed method, and then after the last transformation, a construction of the output source code is made based on this (transformed) syntax tree data structure (STDS) for representing the program.

The checking step P012 checks that the program follows some restrictions, depending on the level of precision one wants to achieve in the analysis, e.g. no call to concurrency functions of the language, the orchestrator is the only function able to spawn tasks, a synchronization specification cannot wait for a task which is not already spawned, etc. This checking step P012 is optional since the provided input source code ISC can already, by construction, follow these restrictions. This checking step P012 is based on the internal data structure for representing the input source code ISC built during the parsing step P011 and delivers a go/no go for execution of following steps, when implemented.

Then, the method comprises a preprocessing step P02 which performs a fine task creation, from the input source code ISC, when it is determined that the input source code ISC comprises at least one fine-grained instructions ordering directive, which instructs synchronization between two different tasks and/or between one task and the orchestrator (main function). In such cases, the preprocessing step P02 transforms the tasks which comprise at least one fine-grained instructions ordering directive in subtasks (the division of a task in two subtasks being done at the location of the *"_label_()"* directive) and adds task spawning directives *("_after_task_()")* at the former location of the *"_after_()"* directive. This step P02 delivers an updated input source code ISC, in case such fine-grained instructions ordering directive are present.

From the (updated) input source code ISC, the core step of the method of the disclosure are implemented and they consist in:
- identifying S01 shared data (shared variables) within the input source code ISC, comprising: implementing at least one pointer analysis which delivers a pointer dependency point-to graph PDPTG, and determining if at least one mutex MTX is to be added to the output source code POSC based on the pointer dependency point-to graph PDPTG (in some situations, it may be possible that no mutex is to be added),
- determining S02 location (placement) of the at least one mutex MTX (is needed) in the output source code POSC as a function of the precompiling directives PCD of the input source code,
- determining S03 task ordering in the output source code POSC, as a function of precompiling directives PCD of the input source code ISC.

According to the disclosure, identifying S01 shared data (shared variables) uses data coming from the internal data structure for representing the input source code ISC and the tasks spawning directives and anticipates code modifications that are to be made by the determining S02 location step and the determining S03 task ordering step.

The method then implements a transformation of the internal (updated) data structure for representing the source code to create the output source code POSC which is set to be compiled using the appropriate compiler. As detailed below, the method allows generating, from the input source code ISC, a concurrent program written in the traditional imperative language augmented with its concurrency features, free of data races and deadlocks, and such that atomicity and ordering requirements are satisfied.

### Description of an embodiment

### Details on precompiling directives

As shortly exposed above, the input source code ISC is annotated with specification precompiling directives for parallelism. The precompiling directives comprises:
- tasks spawning directives associated to above-mentioned tasks, that can be called inside the orchestrator's body only (the main function),
- atomicity requirements on any block of code inside the orchestrator, a task or a regular function, that indicates that the block of code should be executed from its beginning to its end without being interfered by other tasks executions interleaving (atomic block cannot contain any function call or task spawning directive),
- labels that could be inserted inside the orchestrator, a task or a regular function, that will be used to refer to a code location,
- synchronization directives referring to either a task or an above-mentioned label, that could be inserted inside the orchestrator, a task or a regular function, that indicates that all the code located after the directive in the current orchestrator/task/regular function, must be executed after the end of the execution of the code located before the considered label,
- specifically defined data protection to specifically enforce the protection of a data by a mutex name.

It can be noted that these directives are not part of the programming language itself and cannot be understood by any compiler or run-time environment. They are purely specification-oriented and are used as basis for the code generation performed by the disclosed method. The way these precompiling directives are inserted in the input source code is not part of the present disclosure.

More precisely, examples of annotations with these precompiling directives are described in relation with figures 2a to 2c. For clarity purposes, the examples of such directives are illustrated with conventional imperative C language.

Figure 2a illustrates orchestrators, tasks spawning and tasks synchronization. In this example, the main function is considered as the orchestrator. It comprises task creation and task synchronization. T1 and T2 are usual functions, which, in the former code (i.e. without directive) were sequentially called by the main function. With the use of the directive, these two function are set to tasks, which are potentially parallelizable. For example, WRITE(x) (resp. READ(x)) is any statement accessing to x in write mode (resp. read mode). Formerly, _task_(t) means that t must be spawned in parallel of other alive tasks and the rest of the orchestrator body execution. The _after_task_(t) directive means that all the code after this point in the orchestrator must be executed after the end of the execution of t.

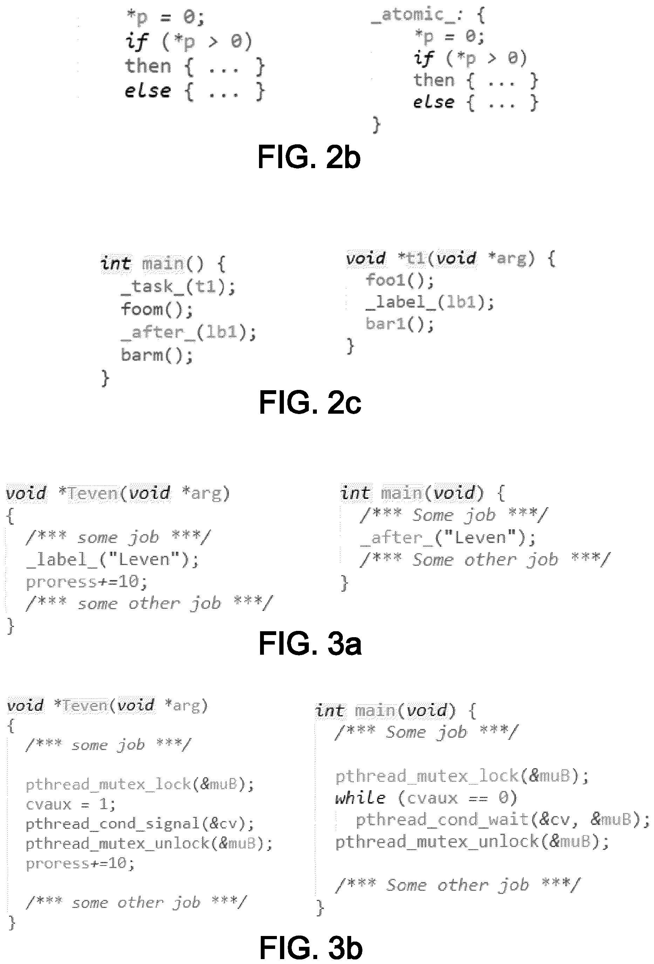

Figure 2b illustrates the Atomicity directive. Declaring a code section as atomic does not mean that it must be executed without any execution of other tasks in parallel. It means that its execution is not impacted by these parallel executions. Figure 2b left illustrates a purely fictional code that could be concerned. If this code section is part of a task that must be executed in parallel of other ones, the value pointed by p may have been modified by another task after the *p = 0 statement, such that one cannot decide which branch will be taken at run-time. Figure 2b right illustrates the code section as atomic. In this case, it is stated that this "atomic" code must be executed as if it was executed in a sequential context, so that the value pointed by p cannot be modified by another task as soon as it is entered into the _atomic_ section. Therefore the "then" branch is never taken in the example.

Figure 2c illustrates the fine-grained instructions ordering directive. This directive works the same way the tasks spawning and the tasks synchronization, but at a statement level, and between tasks. In the example, the code contained in barm() must wait the end of foo1() code execution in t1 to start its execution.

### Embodiment description

As previously explained, the disclosed method allows building a concurrent program written in the traditional imperative language augmented with its concurrency features, free of data races and deadlocks, and such that atomicity and ordering requirements are satisfied. The method is based on a combination of steps, which have already been briefly presented herein before: (P01) parsing and checking of restrictions, (P02) pre-processing that might be required in some cases to enable the analysis, (S01) shared data identification, during which the variables that must be protected are identified, (S02) locks placement, to protect the identified shared data with appropriate mutexes according to required atomicity, user protection and avoiding resource deadlocks, (S03) synchronization placement to place synchronization mechanisms (barriers or condition variables) to meet the specified ordering of the input, following by (S04) code generation to obtain the concurrent program in the traditional programming language. Steps (S01) and (S02) are performed statement by statement, whereas the other steps are performed globally on the input source code. However, a core aspect of the disclosed method is to implement a technique to anticipate the code updates of later steps in earlier ones in order to get better results without losing any scalability of analysis. These steps are explained in detail for one embodiment of the method.

### P01: Parsing and checking

As exposed in detail herein above, parsing is a process for building the internal data structure for representing the program e.g., a syntax tree data structure (STDS) for representing the program (augmented with data structures for precompiling directives associated to the statements).

In addition, checking that the program follows some restrictions, depending on a level of precision to be achieved in the analysis (e.g. no call to concurrency functions of the language, the orchestrator is the only function able to spawn tasks, a synchronization specification cannot wait for a task which is not already spawned) is performed.

The level of precision to be achieved in the analysis is a datum part of a parametrization set.

### P02: Pre-processing

As exposed above, this step is performed, optionally, to enable the analysis (notably the shared data identification) in the presence of fine-grained instructions ordering directives. Figures 3a to 3f illustrate an example of the problematics and of the preprocessing step to allow the shared data identification step to take these directives.

In the example of figure 3a, all the statements located after the _after_("Leven") directive in the code of the main function must be executed after the end of the execution of all the code located before the _label_("Leven") directive in the code of the Teven task.

The most common way to achieve this specification is to rely on condition variables, mixing calls to wait (e.g. in C POSIX pthread_cond_wait) and notify (e.g. in C POSIX pthread_cond_signal), as exposed in figure 3b.

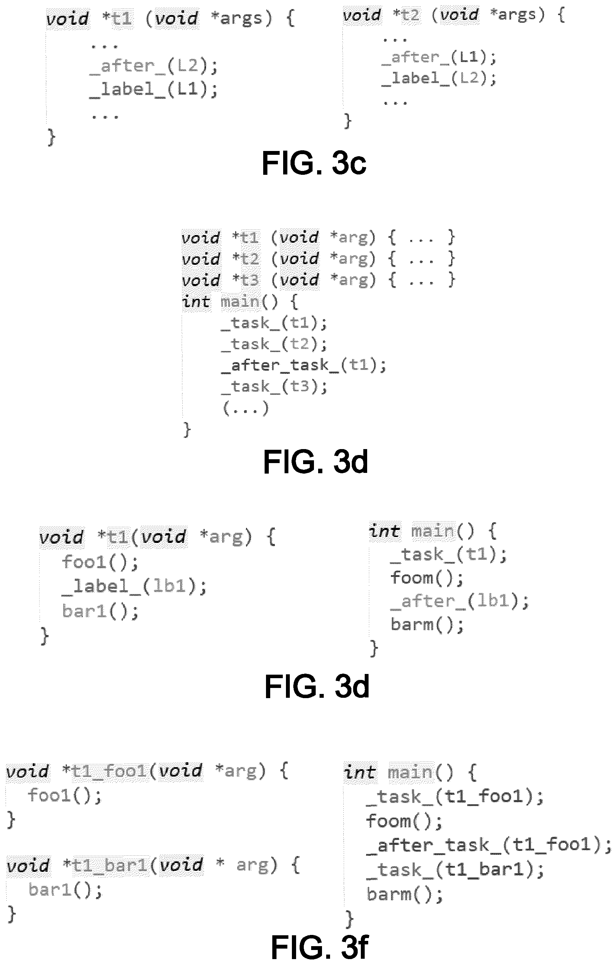

However, the inventors determined that using this strategy implies facing several issues:
- the need to avoid inconsistent ordering, i.e., circular ordering dependencies, e.g. figure 3c in which the specified ordering is not achievable. In some cases, consistency checking might be a hard task, especially when there are calls to functions inside tasks.
- It is very important to take benefits of the constraint for more precise analysis. For instance, if a directive enforces that a statement is after a given point of a task, we should only take aliases induced before this point into account. Similarly, taking fine-grained instructions ordering, we can reduce the set of shared variables among tasks, therefore, we can obtain more efficient program with a higher level of parallelism. Taking this specification into account strongly complexify the analysis of aliases, accessed variables and shared variables.

"Coarse-grained instructions ordering" (by opposition to fine-grained instructions ordering), also referred as tasks ordering, corresponds to the case of tasks synchronization declared at the level of the main function, e.g. in figure 3d:
In this example of figure 3d, it is asserted that the execution of task t3 cannot start before the end of the execution of task t1. However, there is no constraint between the executions of task t2 and task t3. However, this is not sufficient to express fine synchronizations between portions of tasks (statement inside the tasks themselves).

Therefore, it is clear that the possibility to specify fine-grained instructions ordering in the C-Task input programs must be kept and that one should not juts rely on "Coarse-grained instructions ordering".

For ensuring that inner task synchronization still has the possibility to occur, the inventor proposes a technique to transform the input program in order to reduce the fine-grained instructions ordering directive problem to a coarse-grained ordering directive chaining. For that purpose, tasks are split into sub-tasks to be ordered at the level of the main function. Figures 3e and 3f illustrate this on an example, where figure 3e exposes the initial situation with a fine-grained instruction ordering directive, and figure 3f illustrates the result of the preprocessing step on this example.

To reduce the problem to coarse-grained instructions ordering, task t1 is, during the preprocessing phase, split into two sub-tasks t1_foo1 and t1_bar1.

In a general situation, the preprocessing step P02 thus transforms the fine-grained instructions ordering directives of the input source code ISC into a set of coarse-grained ordering directives chaining. Hence, the preprocessing step P02 comprises:
- Identifying P021 fine-grained instructions ordering directives, within the input source code ISC,
- For the identified fine-grained instructions ordering directive in a given task, splitting P022 the given task in as much subtasks as the number of fine-grained instructions ordering directive in the given task, splitting comprising:
   - Creating new subtasks (the number of subtasks created for the given task being equal to the number of fine-grained instructions ordering directive in the given task +1),
   - In the caller task (e.g. main function), replacing the original fine-grained instructions ordering directives with the coarse-grained ordering directives (task spawning) of the created subtasks.

### S01: Shared data identification

This step S01 implements a technology that provides an automatic, efficient and exhaustive identification of required data protection for each statement of the input source code. In imperative programs, a statement is any syntactic unit that is associated to a given action that the program must perform, e.g. an instruction, a loop or a conditional branching, a function call, etc. The technique identifies shared variables (references as shared data) at each statement, taking potential aliases (pointers variables that might point to the same memory location) into account and forecasting the effects of the precompiling directives.

Let us consider any statement *s* of the program, either in the orchestrator body or in the body of a function or task (it is recalled that a task is a call to a function that can be parallelizable).

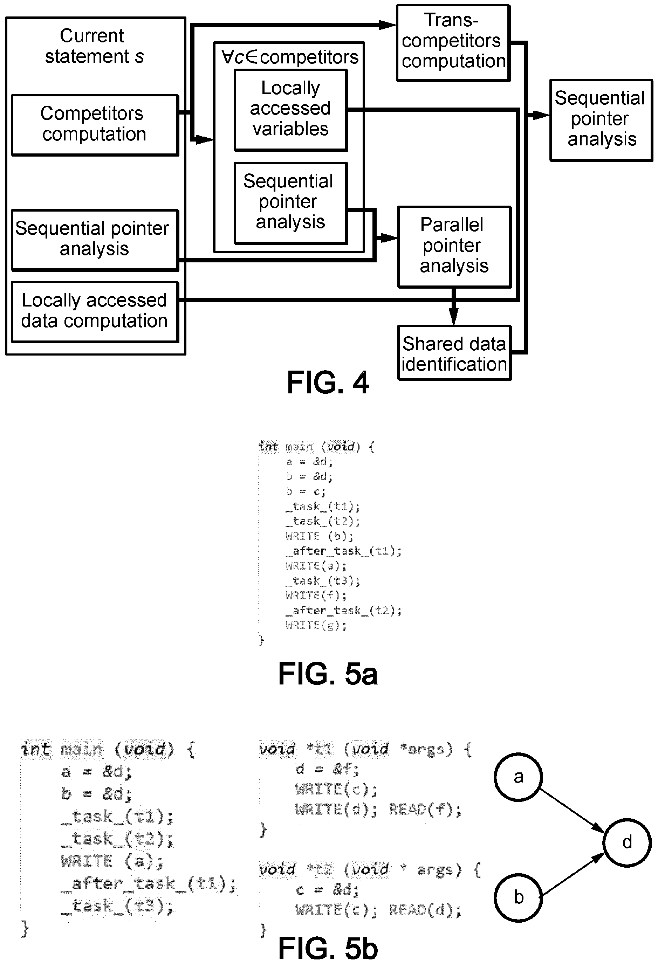

The following sub-steps, illustrated in figure 4, are performed in order to determine which data are shared, for each statement *s* of the set of statements:
- a competitor determination sub-step in which the competitor of the statement (*s*) are determined based on [the order of execution of the competitor compared to the statement (*s*)],
- a locally accessed data computation sub-step in which a set of variables directly accessed by the statement (*s*) is determined,
- a sequential pointer analysis sub-step, in which a set of variables indirectly accessed by the statement (*s*) is determined and stored in a first point-to graph data structure,
- an analysis of competitors sub-step, in which a set of variables directly accessed by the competitors of the statement (*s*) is determined, and in which a set of variables indirectly accessed by the competitors of the statement (*s*) is determined and stored in at least one second point-to graph data structure,
- a parallel pointer analysis sub-step, in which the first point-to graph data structure and the at least one second point-to graph data structure are merged in a unified point-to graph data structure,
- a shared variable identification sub-step, in which, with said unified point-to graph data structure and the set of variables directly accessed by the statement (*s*) are used to identify the variables which are accessed at least twice, one of this access being done in write mode,
- a trans-competitors computation sub-step in which a set of variables indirectly accessed by the competitors of the competitors of the statement (*s*) is determined and stored in at least one third point-to graph data structure and merged with the unified point-to graph data structure in a trans parallel point-to graph data structure,
- a required variable protection identification sub-step in which terminal nodes of the trans parallel point-to graph data structure are selected as variable to be protected.

By following this steps chaining, the device is able to correctly identify the variables (data) to be protected through the use of mutex and to provide this analysis in a seamless and efficient way, compared to existing methods. The sub-steps are detailed above.

### 1. Competitors determination

The processor computes all the tasks and all the statements of the orchestrator that might be executed in parallel of the current statement *s.*

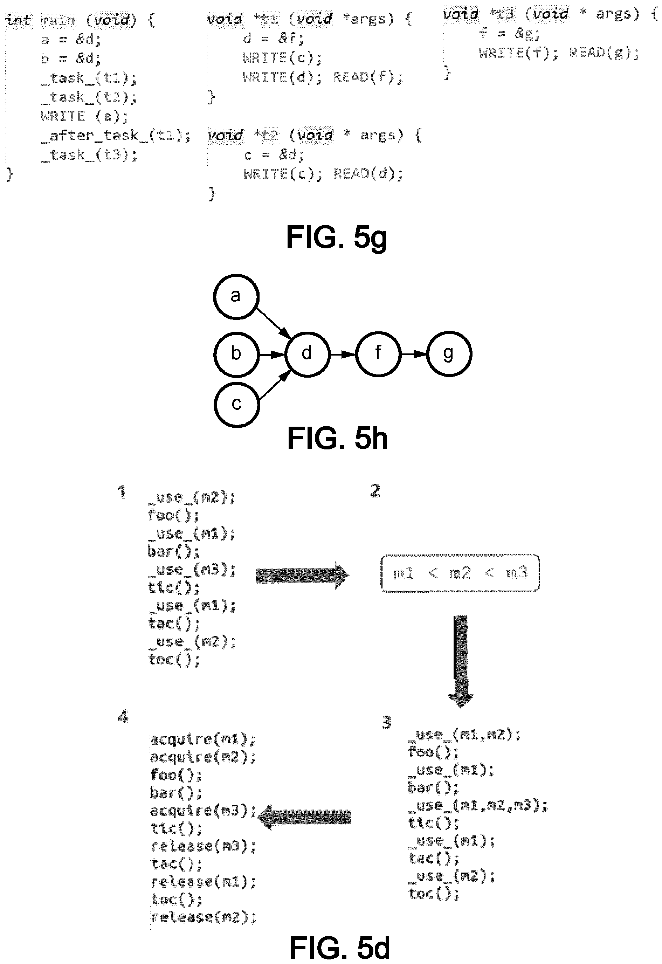

If the current statement s is a statement of the orchestrator or regular function called by the orchestrator, competitors (of the current statement *s*) can only be other tasks. If the current statement *s* is a statement of the body of a task or a regular function called inside a task, competitors can be other tasks or statement of the orchestrator or function called by the orchestrator. fig 5a illustrates it on an example. Here are some competitors in this example:
- Competitors of *t*₁: {*t*₂, *Write(b)}*
- Competitors of *t*₂: {*t*₁, *t*₃, *Write*(*b*), *Write*(*a*), *Write(f)}*
- Competitors of *t*₃: {*t*₂, *Write(f), Write(g)}*

The competitor analysis is furthermore improved by anticipating the effects of synchronization placement phase (S03). Indeed, synchronization placement phase (S03) ensures synchronization specifications given by *_after_task_* or *_after_* directives, that are used in this sub-step#1 to exclude some interleaving that will never happen.

For instance, if there is a directive _after_task_(t) in the body of the main function, followed by some statement s in the body of this main function, the execution of t is never interleaved with *s* so t is not a competitor of s and conversely s is not a competitor of t.

Hence, competitor determination comprises, for the current statement *s* , determining if at least one other statement is executable in parallel of the current statement s excluding statements that are marked by one of the synchronization precompiling directives located before the current statement s.

At the end of this sub-step #1, for each statement, the competitors of the statements are obtained. A competitor data structure is built, for each statement, along with a statement identifier. The data structure (for the current statement s) can be a one-dimension array for example, and a two-dimensions array groups the competitors of all the statements.

### 2. Locally accessed data computation

The processor performs a syntactic analysis of the current statement s to derive the set of variables (or more generally left values, e.g. array element, dereference of pointer, field of a structure...) it accesses directly. The processor also stores their (the variables) access mode (read or write). For instance, if one considers a statement *x = *y (pointer to x is set to pointer to y), there is a direct access to x in write mode and a direct access to y in read mode: pointer to x is set with the value of pointer to y). These elements are stored in a data structure, along with the statement identifier. The data structure (for the current statement s) can be a one-dimension array for example, and a two-dimensions array groups the competitors of all the statements. Additionally, the data structure can be mixed with or made dependent of the syntax tree data structure (STDS) for representing the program for speeding up the process.

### 3. Sequential pointer analysis of statement context

The current statement s could access indirectly to other variables that are actually in alias with the locally accessed data, therefore, the processor performs a pointer analysis at the program point located just before the current statement s. The processor builds a points-to graph that contains nodes corresponding to all the variables accessed in the program and for which an edge between variable *a* and *b* means that *a* might points to *b* at this code location.

At this point, the method does not take into account the presence of other tasks, and the analysis is started from an empty graph at the beginning of the orchestrator or task in which is located the current statement *s.*

There are several categories of pointer analysis that correspond to different tradeoffs between the precision of the analysis and its performance/scalability. Very precise approaches are less scalable and more expensive, and these approaches are avoided, as much as possible, so as to render the method implementable (i.e. efficient) by the processor.

Hence, according to the disclosure, the processor does not need to perform a precise pointer analysis that would be able to give different points-to graphs for the different statements of tasks. Moreover, one does need a less precise analysis. Indeed, when the processor determines that a first statement or first task is a competitor of a second task, this means that the first statement or the first task can possibly be executed in parallel of any of the statements of this second task. The consequence is that the processor needs to consider all the aliases that can exist during the execution of this second task. In other words, the pointer analysis should not be flow-sensitive. Furthermore, it should neither be path-sensitive since this kind of analysis is irrelevant for concurrent code.

Relying on the same example as before (figure2b, left, non-atomic section), as the value pointed by *"p"* might be modified by a competitor before the *"if"* statement, it is important to consider both branches during the pointer analysis on which the competitor analysis relies.

In contrast (figure2b, right, atomic section), if the considered statement is included inside an atomic section, the processor uses techniques to perform a path-sensitive pointer analysis, e.g. based on abstract interpretation, that eliminate some branches of conditional statement depending on previous statement in the considered orchestrator or task.

Indeed, doing so, the processor, implementing the method of the disclosure, anticipates the fact that the next main step (S02, locks placement) shall place mutexes in a way that make the program satisfy the atomicity requirement, so the method already refines the analysis at this earlier stage. It is a way to locally improve the accuracy of the analysis. As the analysis at the level of atomic section is always intra-procedural (no function call or task spawning is allowed inside atomic section), the cost is relatively small, and thus acceptable for an implementation by the device, to produce a result in a decent time.

An example of points-to graph follows, produced by the analysis is illustrated in figure 5b. The points-to analysis which is used in this case is Steensgaard analysis. The current statement *s,* in this example, is "Write(a)".

At statement *s,* both *a* and *b* points to *d.* After the first statement of the main function body (*a* = &*d* ) [that is, assigning the memory address of the integer *d* to the pointer *a, a* points to *d*]. Then, after the second statement of the main function body (*b* = &*d*), *b* also points to *d.*

### 4. Analysis of competitors

As illustrated in figure 4, this analysis of competitors is applied on the whole set of computed competitors of the current statement *s,* of sub-step #1. This analysis comprises, in this embodiments, two sub-steps, of the current statement *s:*

### a. Locally accessed variables of competitors

For each competitor, the processor performs a syntactic analysis and determines which variable (or more generally left value) are directly accessed by the competitor. When the competitor is an orchestrator's statement, it (the variable) is just the set of direct accesses inside this orchestrator's statement. When the competitor is another task, it (the variable) is the set of all direct syntactic accesses inside the body of the task. This is illustrated by the example of figure 5b, with the "Write(a)" statement of the main function (orchestrator). Competitors are tasks t1 and t2. The processor computes the local access to variables in t1 (c and d in write mode, f in read mode) and t2 ("c" in write mode, "d" in read mode) respectively.

### b. Sequential pointer analysis of competitors

For each competitor, the processor performs a pointer analysis at the program point located just after their occurrence (of the competitor) in the code. When the competitor is an orchestrator's statement, the analysis starts from an empty graph at the beginning of the orchestrator body, without taking intermediate tasks spawning into account, and ends after the considered competitor. When the competitor is another task, the analysis is performed on all the statements of the body of the task, starting at the beginning of the graph body, then, all the graphs are merged (as illustrated in merging of graph in sub-step #5).

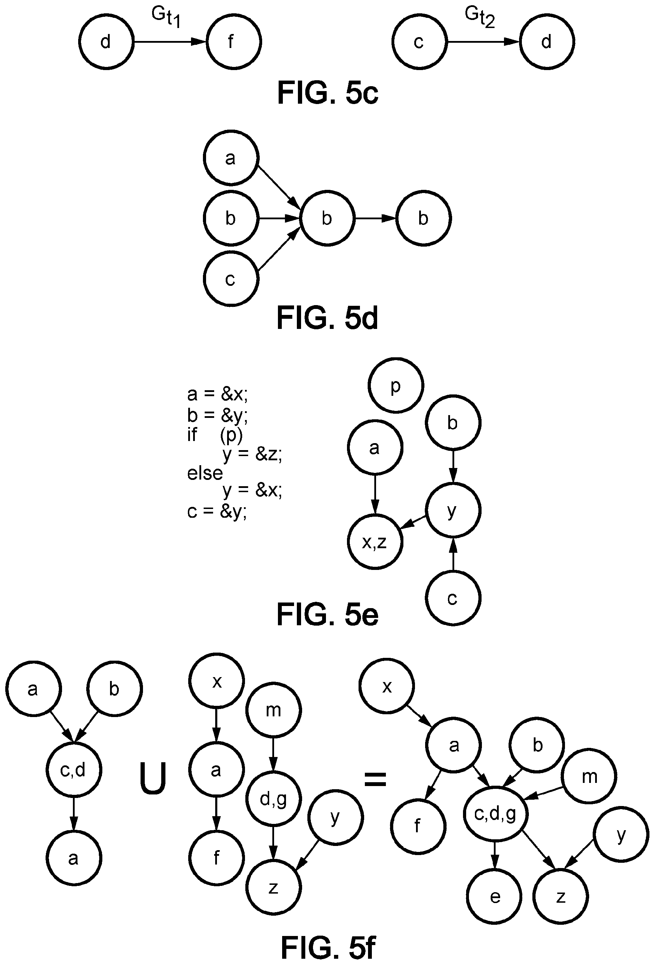

With respect of the example of figure 5b, the resulting points-to graph of the competitors are illustrated in figure 5c. In task t1, statement d = &*f* assigns the address of *f* to pointer *d,* making d points to *f.* Similarly, in task t2, statement *c* = *&d* assigns the address of *d* to pointer *c,* making d points to *f*.

### 5. Parallel pointer analysis

In this sub-step #5, the processor, according to the method, considers all potential sources of parallelism together. In this embodiment, this sub-steps #5 implements graph merging algorithm providing a merged graph in which all pointer information of the graph computed at sub-steps #3 and sub-steps 4.(b) are valid. This merged graph is then used to implements the following sub-steps of the analysis. In examples of figures 5b and 5c, a possible result is illustrated in figure 5d.

In this example of figure 5d, it can be noticed that some variables are in the same node, e.g., "c" and "d" in first graph and "d" and "g" in the second graph. It corresponds to the situation of indistinguishability which is important in some categories of pointer analysis, e.g. in Steensgard's analysis, which can be implemented as part of the analysis according to the disclosure. This means that the variables are always be considered together in the following of the analysis. For instance, if one makes "c" point to a new variable, "d" will also point to this new variable. They are not only in alias but can be considered in the same equivalence class. This indistinguishability feature is illustrated in a simple example by fig. 5e and fig 5f. In Steensgard's pointer analysis, illustrated fig 5e, which is path-insensitive, "y" can points to "z" or "x" but can never decide which branch is taken, these two memory locations are considered as undistinguishable (enabling high performance of the analysis). In contrast, "a" and "y" can points to "x", but if one makes a points to another location variable at some point, "y" can still continue to leave independently. Fig 5f illustrates the same situation, in much more complex example. "U" stands for merging and the obtained graph is illustrates the indistinguishability of the variables. For instance, variables "c", "d" and "g" are indistinguishable.

At the end of this step, each variable to potentially protect during the parallel execution is identified in the "unified" (for statement (*s*)) point-to graph which allows relating the various variables with each other and identify dependent variables.

### 6. Shared variables identification

From the previously computed data (data structures and point-to graphs), the processor then determines which variables among the ones accessed in the current statements (i.e., the ones computed at sub-step #2) are shared, with which other task(s) and throughout which access(es) in this(ese) other task(s).

This step is illustrated by the previous examples and corresponding figures 5a to 5d. For the write statement ("*Write(a)"*):
- Locally accessed variable is "a" in write mode.
- The parallel "unified" points-to graph after merging with graphs of competitors is illustrated in figure 5d.
   - Competitor "t1" accesses to "c" and "d" in write mode, "f" in read mode.
   - Competitor "t2" accesses to "c" in write mode, "d" in read mode.

According to the disclosure, a variable is considered as shared if, modulo aliasing in the graph, there is at least one access to it in write mode and one other access to it (write or read). In this example of figures 5a to 5d, variable "*a*" (the only one to be taken into account in the example) is shared because there is accesses to its aliased variable "c" in write mode in both *"t1"* and *"t2"* competitors, that could refer to a same memory location.

### 7. Trans-competitors' computation

According to the disclosure, for ensuring grabbing of all dependencies that may occur, and efficiently performing the variables protection requirements, the processor, in the sub-step #7 compute indirect competitors of the current statement *s* (these trans-competitors being the statements of the orchestrator or tasks that are competitors of at least one competitor of the current statement*s,* modulo transitivity). This step is explained in accordance with example of figures 5a to 5d in which the additional task "*t3*", as illustrated in fig 5g.

Task "t3" is not a direct competitor of the considered statement, but as it is a competitor of "t2", which is itself a competitor of the considered statement ("Write(a)") of the orchestrator. According to the disclosure, for capturing the trans-competitor, the processor computes, in this embodiment, a merged graph, the same way as in sub-step #6, but taking all the competitors and trans-competitors into account. This graph is called the trans-parallel points-to graph. Figure 5h illustrates the simple point-to graph obtained by running this analysis. In this example, as "f" points to "g" at the end of "t3", a new node and a new edge are added (compared to the parallel points-to graph) in the trans competitor point-to graph (trans parallel point-to graph).

### 8. Required data protection

In this last sub-step #8 of step S01, according to the disclosure, the processor computes choices of an appropriate mutex name to protect the variable identified as shared. For achieving this result, the inventors determined that, in this embodiment, using the trans parallel point-to graph leads to better results.

Indeed, with respect to the example of figure 5g and figure 5h, choosing *µₐ* (mutex of "a") would not be appropriate because in competitors, the accessed variable is c, which is a sharing of the same memory location as the one pointed by a, but *µ_{c}* (mutex of "c") could be chosen by symmetry. This is not correct since it is needed to protect the two accesses ("a" in the orchestrator, "c" in "t1" or "t2") by the same mutex. One could say that at the location of the considered statement t3 is not alive, so the most terminal common variable that is shared is "f", therefore, *µ_{f}* (mutex of "f") could be chosen. This is still wrong, since when considering the access to "c" in write mode in "t2", one would have considered "t3" in the set of competitors, and would have protected it by *µ_{g}*, (mutex of "g") while in the orchestrator and "t1" the protection is given by *µ_{f}*, which leads to mis-protection of shared data.

However, thanks to the trans-parallel points-to graph, which is common to these accesses, and thanks to the fact that the terminal node "g" is common, the correct mutex *µ_{g}* name is correct in all cases. In some cases (see example of figure 5f), there are several terminal nodes, and thus several mutexes are taken.

At the end of this step, the information about the required mutexes at the considered statement location are stored in a mutexes location data structure, which is to be shared with the previous data structures (notably the syntax tree data structure). This step S01 is repeated for all the statement of the program, and each concerned statement is possibly associated with zero, one or several mutexes, depending on the situation. The resulting mutexes location data structure is then provided to the Locks placement (S02) step, for achieving the effective mutex placement in the modified input source code.

### S02: Locks (mutex) placement

During the shared data identification step S01, the device implements the method for determining the required mutex for each statement of the program. The globalization of this determination helps now determining how to place mutexes acquisitions and releases in order to satisfy these mutexes requirements.

A first approach would be to acquire mutexes just before any statement in which they are required and to release them just after this same statement. However, the inventors determined this is not sufficient to guarantee the required atomicity and the absence of resource deadlocks in the obtained program. The inventors determined that features should be implemented to avoid these issues:
- relying on a global lock acquisition ordering: choosing any order of acquisition among mutexes of the program, which is always satisfied among statements of the orchestrator or tasks that could be executed in parallel (in other terms, that are competitors of each other). If mutex *µ*₁ is less than mutex *µ*₂ in the chosen order, *µ*₂ cannot be acquired out of a critical section protected by mutex *µ*₁. Out of atomic sections, this is sufficient to ensure the correctness of the generated program. For any statement, the processor produces an acquisition of the required mutexes following the order just before this statement, and the processor produces a release of the mutex in the opposite order just after this statement.
- relying on a two-phase locking policy: in atomic sections, in addition to the deadlock avoidance principle, the processor implements a two-phase locking (for satisfying atomicity): this means that, inside the atomic section, a mutex is acquired before the first statement that requires its protection, and released only after the last statement that requires its protection.

In addition, according to the method of the disclosure, in atomic sections, the two-phase locking strategy should be mixed correctly with the global lock acquisition ordering strategy to also avoid deadlocks. The processor performs the algorithm illustrated in figure 6:
- (1) the input is the program with each statement being associated with its mutexes requirements, in the form of directives (_use()_),
- (2) an order is chosen and must be the same in all the competitors (the ordering of the different competitors sets could be considered as inputs of the proposed method),
- (3) each time a mutex is required at a given statement, the process requires all the mutexes that comes before in the chosen ordering, except the ones that are no more required in the rest of the atomic section,
- (4) then, from this transformed input code, the processor performs a two-phase locking strategy to satisfy the required atomicity given by the annotations.

Finally, the processor performs an additional process to satisfy data protection requirements in the input program while optimizing the program. Hence, from the list of all the critical sections of the program, associated to their mutexes and the data protected, the processor realizes a detection to identify unnecessary mutexes (for instance, any mutex which is always acquired and released at the same time than another one) and makes deletion of these redundant mutexes. In addition, in cases where specific requirements are identified in the input source code, these specific requirements are also taken into account. In case the processor is facing a choice among mutexes, the required ones (i.e. the ones that were specifically inserted in the input source code by using the appropriate precompiling directives "specifically defined data protection") are kept.

Furthermore, at the same time, the algorithm adds any required mutex which is not considered after locks placement and takes this newly added mutex when analyzing potential unnecessary mutex. For instance, if at step S01, variable "x" is always protected by *µₓ* and *µₓ'* but the required mutex is *µ_{ρ}* , the algorithm will remove *µₓ* and *µₓ'* and will keep *µ_{ρ}*.

### S03: Synchronization placement

Since the pre-processing step P02 has been performed previously, the only ordering constraints to be satisfied are waiting of tasks' execution ending. Therefore, it is sufficient to require a barrier associated to a task t' in current task t, when encountering an _after_task_ requirement in the pre-processed version of the program. A barrier is a synchronization mechanism that enforces the thread of task t to stop its execution when encountering this barrier, as long as thread associated to task t' is not terminated. Examples of barriers are condition variables and thread joins.

### S04: Code generation

This step is rather straightforward: each task spawning, mutex acquirement, mutex release or synchronization identified during previous steps is transformed into corresponding concurrency functions calls in the traditional imperative language which is considered. For instance, in POSIX C, spawning of task is replaced by pthread_create call, acquirements and releases of mutexes are replaced by pthread_mutex_lock and pthread_mutex_unlock calls, and synchronization with threads is replaced by pthread_join call. The final file is also processed to import required concurrency libraries, initialize threads (corresponding to tasks) and declare mutexes with the adequate datatype in the considered traditional language.

## Claims

1. A method for generating an output source code (POSC), the output source code (POSC) being compilable for being executed in parallel over a processor which comprises at least two cores, the method being implemented by an electronic device comprising a processor and a memory, the method comprising the following ordered steps, executed by the electronic device:
- obtaining (P00), into the memory of the electronic device, a syntax tree data structure (STDS) of an input source code (ISC) written in a non-concurrent programming language, the input source code (ISC) further comprising predetermined precompiling directives (PCD),
- identifying (S01), with the syntax tree data structure (STDS), at least one shared variable within the input source code (ISC), comprising: implementing, in the syntax tree data structure (STDS), at least one pointer analysis which delivers a pointer dependency point-to graph (PDPTG), the pointer dependency point-to graph (PDPTG) linking the use of each pointed variable with each other, and determining at least one mutex (MTX) to be added to the output source code (POSC) based on the pointer dependency point-to graph (PDPTG) and based on the precompiling directives (PCD),
- determining (S02) location of the at least one mutex (MTX) in the syntax tree data structure (STDS) for the output source code (POSC) as a function of the precompiling directives (PCD) of the input source code,
- determining (S03) task ordering in the syntax tree data structure (STDS) for the output source code (POSC), as a function of the precompiling directives (PCD) of the input source code,
- generating (S04) the output source code (POSC) from the syntax tree data structure (STDS).

2. The method according to claim 1, wherein the precompiling directives (PCD) of the input source code (ISC) belong to the group comprising:
- atomicity requirement directive,
- instructions ordering directive,
- task spawning directive,
- task synchronization directive.

3. The method according to claim 1 or 2 wherein obtaining (P00) into the memory of the electronic device, a syntax tree data structure (STDS) of the input source code (ISC) comprises, a pre-analyzing step (P01) comprising a parsing (P011) step in which the input source code (ISC) is transformed into the form of the syntax tree data structure (STDS) and stored within the memory of the electronic device.

4. The method according to claim 3 wherein the pre-analyzing step (P01) step further comprises a checking step (P012) for determining that the input source code (ISC) and the precompiling directives (PCD) are exempt of incompatible statements.

5. The method according to claim 3 or 4 wherein obtaining (P00) into the memory of the electronic device, a syntax tree data structure (STDS) of the input source code (ISC) further comprises a pre-processing step (P02) in which the syntax tree data structure (STDS) is updated by transforming parts of the input source code (ISC) that comprises instructions ordering directives into corresponding parts comprising task spawning and task synchronization directives.

6. The method according to claim 5 wherein transforming parts of the input source code (ISC) that comprises instructions ordering directives into corresponding parts comprising task spawning and task synchronization directives comprises splitting some functions, which comprises instruction ordering precompiling directives for accessing to some variables, in subfunctions and in which the electronic device replace the instruction ordering precompiling directives with task spawning and task synchronization precompiling directives in syntax tree data structure (STDS) of the input source code (ISC).

7. The method according to any of claim 1 to 6, wherein identifying (S01) with the syntax tree data structure (STDS), at least one shared variables within the input source code (ISC) comprises, for each statement (*s*) of the input source code (ISC):
- a competitor determination sub-step in which the competitor of the statement (*s*) are determined based on the order of execution of the competitor compared to the statement (*s*),
- a locally accessed data computation sub-step in which a set of variables directly accessed by the statement (*s*) is determined,
- a sequential pointer analysis sub-step, in which a set of variables indirectly accessed by the statement (*s*) is determined and stored in a first point-to graph data structure,
- an analysis of competitors sub-step, in which a set of variables directly accessed by the competitors of the statement (*s*) is determined, and in which a set of variables indirectly accessed by the competitors of the statement (*s*) is determined and stored in at least one second point-to graph data structure,
- a parallel pointer analysis sub-step, in which the first point-to graph data structure and the at least one second point-to graph data structure are merged in a unified point-to graph data structure,
- a shared variable identification sub-step, in which, with said unified point-to graph data structure and the set of variables directly accessed by the statement (*s*) are used to identify the variables which are accessed at least twice, one of this access being done in write mode,
- a trans-competitors computation sub-step in which a set of variables indirectly accessed by the competitors of the competitors of the statement (*s*) is determined and stored in at least one third point-to graph data structure and merged with the unified point-to graph data structure in a trans parallel point-to graph data structure,
- a required variable protection identification sub-step in which terminal nodes of the trans parallel point-to graph data structure are selected as variable to be protected.

8. The method according to claim 7 wherein the competitor determination sub-step comprises determining whether, within the syntax tree data structure (STDS), the current statement *s* is located after a task synchronization directive, and in the case the current statement *s* is located after a task synchronization directive, ignoring potential competitor statements located before the task synchronization directive.

9. The method according to claim 7 wherein the sequential pointer analysis sub-step comprises determining whether, within the syntax tree data structure (STDS), the current statement s is located into a code section that has been labelled by an atomicity directive, and in the case the current statement s is located into a code section that has been labelled by an atomicity directive, performing a path-sensitive pointer analysis for this code section.

10. The method according to claim 7 wherein the pointer analysis are Steensgard's analysis.

11. An electronic device for generating an output source code, the output source code being compilable for being executed in parallel over a processor which comprises at least two cores, the electronic device comprising a processor and a memory, the electronic device comprising comprising components for:
- obtaining, into the memory of the electronic device, a syntax tree data structure of an input source code written in a non-concurrent programming language, the input source code further comprising predetermined precompiling directives,
- identifying, with the syntax tree data structure, at least one shared variable within the input source code, comprising: implementing, in the syntax tree data structure, at least one pointer analysis which delivers a pointer dependency point-to graph, the pointer dependency point-to graph linking the use of each pointed variable with each other and determining at least one mutex to be added to the output source code based on the pointer dependency point-to graph and based on the precompiling directives,
- determining location of the at least one mutex in the syntax tree data structure for the output source code as a function of the precompiling directives of the input source code,
- determining task ordering in the syntax tree data structure for the output source code, as a function of the precompiling directives of the input source code,
- generating the output source code from the syntax tree data structure.

12. A computer program comprising instructions causing the implementation of the method according to anyone of the claims 1 to 13 when such instructions are run by a processor.
